# EUROPEAN PATENT APPLICATION

(11) **EP 0 690 139 A1**
(43) Date of publication of application: **03.01.1996**
(21) Application number: 95201727.5
(22) Date of filing: 26.06.1995
(51) Int. Cl.: C22B 21/00, F27B 7/28, F27D 1/00

(54) **Refractory construction**

(30) Priority: 29.06.1994 NL 9401087
(71) Applicant: HOOGOVENS GROEP B.V., NL-1970 CA IJmuiden (NL)
(72) Inventor: Beelen, Christiaan Matheus Joseph Maria, NL-1826 KA Alkmaar (NL)
(74) Representative: Wentzel, Hendrik Cornelis

(57) **Abstract**

Refractory construction for a furnace for processing and/or melting material containing aluminium in a non-oxidizing atmosphere, comprising
(i) a wear lining (11) of a refractory material based on high purity MgO, Al₂O₃ or the spinel MgO.Al₂O₃ or a mixture thereof,
(ii) a permanent lining (12), and
(iii) an insulation layer (15) between the permanent lining (12) and the shell (14).
This lining can resist the conditions in such a furnace well and provide a long service life.

## Description

The invention relates to a refractory construction for a furnace for processing and/or melting material containing aluminium in a non-oxidizing atmosphere, to a furnace having such a refractory construction, to a method of preparing such a furnace and to a method of treatment of material containing aluminium in such a furnace.

In the context of this patent application, material containing aluminium is understood to be primarily slag occurring in the production of aluminium on the surface of molten aluminium. This material is also known in the art as dross. This dross still contains a great deal, for example 60%, of aluminium metal, and otherwise consists primarily of oxides. Material containing aluminium is also be understood to be aluminium scrap. This can be clean recycling scrap, painted or printed clean recycling scrap or aluminium scrap that has been separated from household waste. The material which may be treated in the furnace of the invention is however not limited.

From practice it is known to process dross containing aluminium in an oxidizing atmosphere in a rotary furnace fired by an air-fuel burner. Because above 1000°C there is a high risk of aluminium combustion or explosion, the process is held to 850°C and dissolving salts have been used (mainly NaCl and KCl). About 0.5 ton of salt is added for every one ton of dross. After aluminium is tapped off about 1 ton of non metallic product (NMP) remains. However, this process is slow, has a low thermal yield and causes environmental problems.

In US-A-3,759,702 it is proposed to melt aluminium scrap in an open, stationary furnace without salt in a reducing atmosphere with the aid of an oxy-fuel burner with a stoichiometrically short measure of oxygen.

In EP-A-322,207 it is proposed to process aluminium dross in an enclosed rotary furnace without salt in an inert gas atmosphere with the aid of a plasma burner. Much energy is lost in water cooling the plasma burner. A scraper for removing NMP bears adhering to the refractory lining is necessary.

In US-A-5,245,627 it is proposed to process aluminium dross in an enclosed rotary furnace without salt in an inert gas atmosphere with the aid of an electric arc between graphite electrodes.

In PCT/SE92/00111 it is proposed to process aluminium dross in an enclosed rotary furnace without salt in a non-oxidizing atmosphere with the aid of an oxy-fuel burner.

We have found that the refractory construction of the furnace is a problem with processes in which material containing aluminium is processed and melted in a non-oxidizing, that is a reducing or inert, atmosphere. The aluminium silicates common in the aluminium industry, to which phosphate and barium sulphate are usually added to repel aluminium, decompose in a non-oxidizing atmosphere and quickly corrode in contact with molten aluminium above 1000°C.

The object of the invention is to provide a good refractory construction for a furnace for processing and/or melting a material containing aluminium in a non-oxidizing atmosphere.

In accordance with the invention there is provided a refractory construction as set out in claim 1.

The expression "refractory material based on ..." is conventional in the industry, and means here that the MgO, Al₂O₃, MgO.Al₂O₃ or mixture thereof is the primary (largest) component of the refractory material. Typically this may mean more than 50% or more than 60% by weight. In this invention this component may be any one of MgO, Al₂O₃ and the spinel MgO.Al₂O₃ or any combination of two of them or the mixture of all three of them, in any suitable proportions.

In the context of this patent application high purity is taken to mean that the quantity of impurities in the base material is low. In general this means that natural materials such as dolomite, bauxite, mullite and andalusite are not suitable and that the starting point should preferably be base materials with less than 10 %wt., and preferably less than 5 %wt., impurities. This frequently means that synthetic base materials such as for example seawater magnesite are used.

In this context the shell is understood to be the metal wall of the furnace.

This construction of the invention and in particular the base material for the wear lining provides a construction with a good service life.

Preferably the composition of the material of the wear lining comprises by weight, in addition to the base component,
0 - 10% metallic Al and/or Mg
5 - 20% carbon, preferably in the form of natural or flake graphite
2 - 6% resin or pitch as binding agent.
The natural graphite helps prevent solid material from baking onto the wear lining. The metallic Al and Mg encourages spinel to form.

The wear lining is preferably composed of bricks which are refined at a temperature of about 600°C or above before being placed in the furnace. This prevents gases hazardous to health from generating as the furnace is fired up.

The permanent lining preferably consists of, is impregnated with, or is provided with a layer of, a material containing a phosphate. This repels molten aluminium unexpectedly penetrating through to the permanent lining.

The permanent lining is preferably a refractory material based on phosphate-bound aluminium silicate. Aluminium silicate is selected because of its high strength and poor heat conductivity in the refractory construction. The phosphate bond is chosen as prevention against unexpected penetration of molten aluminium through to the permanent lining.

Furnaces for the process under discussion may be, and in practice frequently will be, built as rotary furnaces. In that case it is preferable to provide the furnace wall internally with metal support elements extending radially to the rotation axis and extending through the insulation layer into the permanent lining. As the furnace rotates high shearing forces are exerted on the refractory construction in the peripheral direction, possibly causing damage to the refractory construction. The support elements, such as straps, prevent this.

An embodiment of the invention will now be illustrated by way of example and with reference to the accompanying drawings.

Figure 1 shows a furnace for processing and melting material containing aluminium, having a refractory construction embodying the invention.

Figure 2 shows the refractory construction of the furnace in cross-section on line II in Figure 1.

Figure 3 shows a detail of the refractory construction indicated at III in Figure 2.

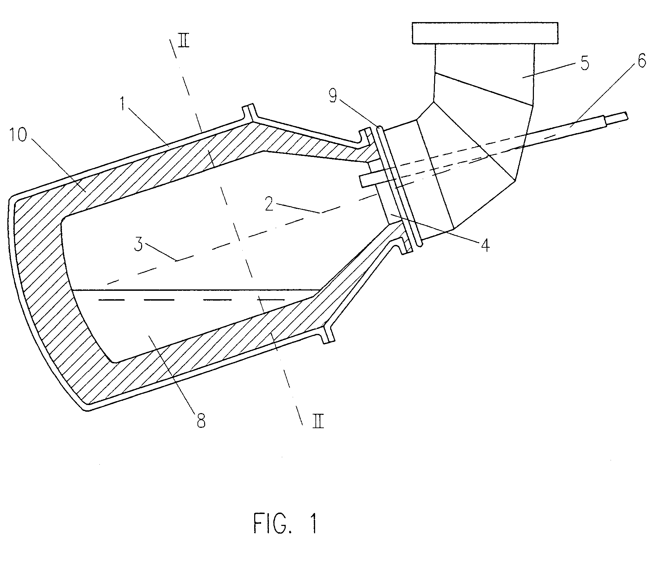

The furnace in Figure 1 comprises a rotary furnace vessel 1 with its rotational axis 2 at an angle of 10-25 degrees to the horizontal which is free to rotate around its axis 2 at a velocity of 1 to 25 rotations per minute. The furnace vessel can also be tilted around a transverse axis 3 for tapping off. The furnace vessel has an opening 4 which during operation is closed by the curved duct 5 that couples with a little play at flange 9 onto the opening 4 of the furnace vessel. An oxy-fuel burner 6 projects through the duct 5 into the furnace vessel and heats the interior of the furnace vessel in a non-oxidizing atmosphere. The combustion gases are discharged via duct 5.

The refractory construction 10 of the furnace vessel is heated by radiation and convection to a maximum temperature of 1400°C without the oxy-fuel burner flame having any direct contact with the refractory construction. The revolving of the furnace vessel brings the heated refractory construction into contact with the material 8 containing aluminium and transfers the heat thereto. The heat transferred by conduction through the refractory construction and the radiation heat of the flame melts the aluminium in the material containing aluminium. In this way direct contact with the flame is avoided as much as possible so that the aluminium and the oxides are prevented from overheating. The temperature of the aluminium is for example 800°C maximum. Typically this furnace is operated in a batch process, with no use of molten salt.

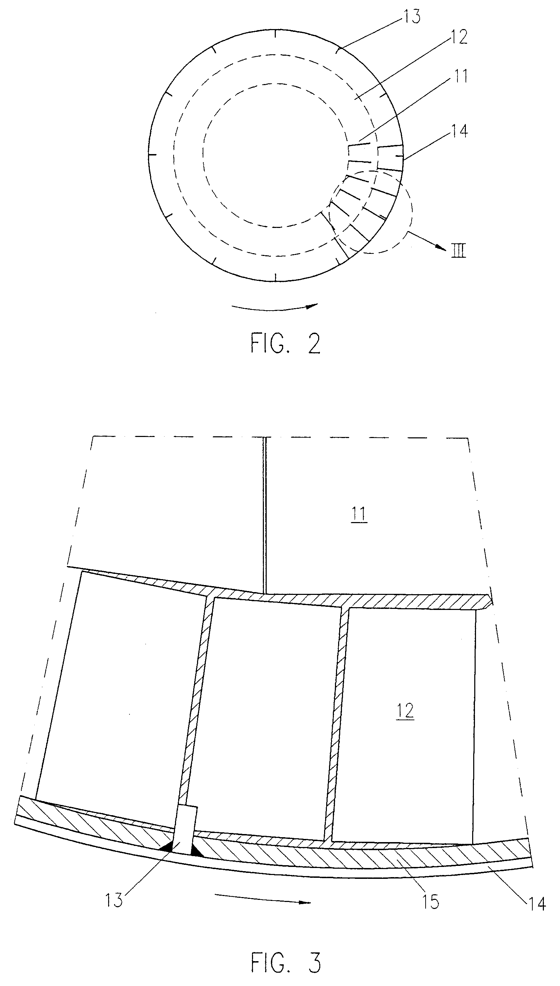

Figures 2 and 3 show the composition of the refractory lining construction of this furnace, comprising a wear lining 11, a permanent lining 12 and support straps 13 on the shell 14. The linings 11 and 12 are formed of refractory bricks.

### EXAMPLE

As an example Figure 3 shows a preferred embodiment of the refractory construction in more detail. It shows that the wear lining 11 consists of closely fitting bricks. The wear lining 11 is 230 mm thick. It consists of resin-bonded bricks of sintered magnesia contain by weight 11.5% natural graphite and 4.2% aluminium powder. The resin content is 4%. These sintered magnesia bricks are made by pre-sintering magnesia, and then pulverizing the material before shaping the bricks. The impurity content of the sintered magnesia is less than 2% by weight. Before placing in the furnace, the bricks were pre-heated at about 600°C in a reducing atmosphere. These bricks have a thermal conductivity coefficient of 10-12 W/mK at 1400°C and a specific heat of 2000 J/kgK.

The permanent lining 12 likewise consists of bricks and is 114 mm thick. The bricks are burned phosphate-impregnated aluminium silicate bricks mortared on all sides with a phosphate-bound mortar based on corundum. These bricks have a thermal conductivity coefficient of 2.3 W/mK, a specific heat of 1400 J/kgK and a cold compression strength of 60 N/mm².

The carrier straps 13 are fitted with equal spacing on the interior of the metal shell 14. The insulation 15 of Microtherm (trademark) with a thermal conductivity coefficient of 0.03 W/mK at 400°C is fitted between the permanent lining 12 and the shell 14. The carrier straps 13 project through the insulation 15 into the permanent lining 12 and prevent the refractory construction from shearing and pulverizing as the furnace rotates.

In this manner a refractory construction is created with a wear lining that
- is refractory to over 1400°C
- is resistant to a non-oxidizing atmosphere
- is resistant to molten aluminium of 800°C
- is very dense because of thermal expansion and prevents aluminium penetration
- does not react to oxides in dross containing aluminium
- absorbs and dissipates heat quickly
- has good strength
and, with a permanent lining that
- has good strength
- is resistant to unexpected aluminium penetration
- conducts heat poorly.
The temperature of the shell 14 remains below 150°C under all conditions.

## Claims

1. Refractory construction for a furnace for processing and/or melting material containing aluminium in a non-oxidizing atmosphere, the furnace having a metal shell (14), characterized in that the refractory construction comprises
(i) a wear lining (11) of a refractory material based on high purity MgO, Al₂O₃ or the spinel MgO.Al₂O₃ or a mixture thereof,
(ii) a permanent lining (12), and
(iii) an insulation layer (15) between the permanent lining (12) and the shell (14).

2. Refractory construction according to claim 1 wherein said MgO, Al₂O₃ or spinel MgO.Al₂O₃ or mixture thereof of the wear lining contains at most 10% by weight of impurities.

3. Refractory construction according to claim 1 or claim 2 wherein the wear lining contains by weight, in addition to the base component,
0 - 10% in total metallic Al and/or Mg
5 - 20% carbon
2 - 6% resin or pitch as binding agent.

4. Refractory construction according to any one of claims 1 to 3 wherein the permanent lining (12) consists of, is impregnated with, or is provided with a layer of, a material containing a phosphate.

5. Refractory construction according to claim 4 wherein the permanent lining (12) is a refractory material based on phosphate-bound aluminium silicate.

6. A furnace for processing and/or melting material containing aluminium in a non-oxidising atmosphere, having a refractory construction according to any one of claims 1 to 5.

7. A furnace according to claim 6, which is a rotary furnace and wherein the shell (14) is provided internally with metal support elements for the refractory construction which extend radially with respect to the axis of rotation and extend through the insulation layer (15) into the permanent lining (12).

8. A method of preparing a furnace according to claim 6 or claim 7, including the step of placing bricks of the material of the wear lining (11) in the furnace, wherein the bricks are heated at a temperature of at least 600°C before being placed in the furnace.

9. Method of processing and/or treating material containing aluminium in a non-oxidizing atmosphere in a furnace, wherein the furnace has a refractory construction according to any one of claims 1 to 5.
